# EUROPÄISCHE PATENTSCHRIFT

(11) **EP 2 181 221 B1**
(45) Veröffentlichungstag und Bekanntmachung des Hinweises auf die Patenterteilung: **31.10.2012**
(21) Anmeldenummer: 08749403.5
(22) Anmeldetag: 08.05.2008
(51) Int. Cl.: E02F 9/22, E02F 9/12, B66C 23/86

(54) **DREHWERK EINES BAGGERS MIT EINEM HYDRAULIKANTRIEB.**
ROTATION SYSTEM OF AN EXCAVATOR WITH A HYDRAULIC DRIVE.
MÉCANISME ROTATIF D'UNE EXCAVATRICE AVEC UN ENTRAÎNEMENT HYDRAULIQUE.

(30) Priorität: 23.08.2007 DE 202007011783 U
(43) Veröffentlichungstag der Anmeldung: 05.05.2010
(73) Patentinhaber: Liebherr-France SAS, 68005 Colmar Cedex (FR)
(72) Erfinder: HELBLING, Frank Lothar, 79361 sasbach (DE)
(74) Vertreter: Laufhütte, Dieter
(86) Internationale Anmeldenummer: PCT/EP2008/003715
(87) Internationale Veröffentlichungsnummer: WO 2009/024197

(56) Entgegenhaltungen:
- EP-A- 0 900 888
- EP-A- 1 433 648
- EP-A- 1 439 310
- DE-A1-102005 060 994
- DE-A1-102005 061 991
- JP-A- 61 031 534
- JP-A- 63 067 403
- JP-A- 2005 003 183
- JP-U- 54 158 403
- US-A- 4 350 220
- US-A1- 2007 056 277

## Beschreibung

Die vorliegende Erfindung betrifft ein Drehwerk eines Baggers gemäß dem Oberbegriff des Anspruchs 1.

Die hydraulisch angetriebenen Grundfunktionen eines Baggers sind Ausrüstungsbewegungen, welche über hydraulische Zylinderantriebe ausgeführt werden, sowie Fahrbewegungen des Baggers und Drehbewegungen des Oberwagens, welche über hydrostatische Rotationsantriebe erzeugt werden. Die hydraulische Energie hierfür wird von einer oder mehreren Pumpen zur Verfügung gestellt, welche wiederum von einem Verbrennungsmotor, insbesondere einem Dieselmotor, angetrieben werden. hierbei kommt ein Pumpenverteilergetriebe zwischen Verbrennungsmotor und einer oder mehreren Pumpen für die Ausrüstungs- und Fahrbewegung zum Einsatz. Insbesondere für die Drehbewegung des Oberwagens kann dabei eine separate Pumpe verwendet werden.

Die neben der hydraulischen Energie entstehende Wärmeenergie, welche die hydraulische Flüssigkeit erwärmt, wird über Kühler wieder abgeführt. Die vom Dieselmotor zur Verfügung gestellte Energie wird damit in hydraulische Energie und Verluste umgewandelt.

Insbesondere für die Drehbewegung des Oberwagens eines Hydraulikbaggers kommt nun ein Hydraulikantrieb zum Einsatz, bei welcher die von einer Pumpe zur Verfügung gestellte Hydraulikenergie in einem Hydraulikmotor wieder in mechanische Energie übersetzt wird. Der Hydraulikmotor erzeugt so die Drehbewegung in Kombination mit einem entsprechenden Drehwerksgetriebe. Die Kenngrößen eines solchen Antriebs sind das Drehmoment sowie die Drehzahl, wobei das Drehmoment durch den Hydraulikmotor, den Druck, das Schluckvolumen und die Getriebeübersetzung bestimmt wird, die Drehzahl durch den zur Verfügung stehenden Ölvolumenstrom, das Schluckvolumen und die Getriebeübersetzung.

Zur Ausführung des Hydraulikantriebs sind aus dem Stand der Technik im Wesentlichen zwei Alternativen bekannt:

Der Hydraulikantrieb kann aus einem offenen Hydraulikkreislauf bestehen, bei welchem die Pumpe über ein Steuerventil mit dem Motor in Verbindung steht. Die Arbeitspumpe kann dabei eine Konstantpumpe oder eine Verstellpumpe sein. Das Steuerventil steuert Druck und Menge des Hydraulikflüssigkeitsvolumenstroms und steuert so den Motor. Die Hydraulikflüssigkeit wird von der Pumpe aus einem Rücklaufspeicher angesogen, in welchem die Hydraulikflüssigkeit vom Ablauf des Motors zurückfließt. Bei einem Abbremsen der Drehbewegung wird die Bremsenergie bei einer solchen Steuerung hydraulisch vernichtet und steht dem System nicht mehr zur Verfügung.

Für einen geschlossenen Kreislauf wird eine separate Drehwerkspumpe verwendet, welche ohne Ventil in einem geschlossenen Kreislauf mit dem Motor in Verbindung steht. Die Pumpe ist dabei üblicherweise eine Verstellpumpe, so daß Druck und Menge des Hydraulikflüssigkeitsvolumenstroms über die Pumpe gesteuert werden können. Während eines Bremsvorgangs stützt sich die Drehwerkspumpe bei einer solchen Anordnung über das Getriebe auf dem Verbrennungsmotor ab, so daß die Energie theoretisch anderen Verbrauchern zur Verfügung steht. Im tatsächlichen Betrieb wird jedoch die Energie zu dem Zeitpunkt, in dem sie ansteht, praktisch nicht benötigt und geht damit verloren.

EP 0 900 888 A1 offenbart ein Drehwerk eines Baggers mit einem Hydraulikantrieb. Der Hydraulikantrieb weist einen offenen Kreislauf und einen Hochdruckspeicher auf, der über ein Ventil mit dem Hydraulikkreislauf verbindbar ist.

Aufgabe der vorliegenden Erfindung ist es, ein Drehwerk vorzusehen, in dem eine effiziente und flexible Energierückgewinnung möglich ist.

Erfindungsgemäß wird diese Aufgabe von einem Drehwerk eines Baggers gemäß Anspruch 1 gelöst. Vorteilhafte Ausgestaltungen der Erfindung sind Gegenstand der Unteransprüche.

Ein Hochdruckspeicher ist vorgesehen, der über zumindest ein Ventil mit der Pumpe und/oder dem Motor verbindbar ist, sowie eine Steuerung, welche das zumindest eine Ventil ansteuert. Dieser Hochdruckspeicher ermöglicht es, hydraulische Energie zu speichern und sie später dem Antrieb wieder zur Verfügung zu stellen. Durch das Zuschalten des Hochdruckspeichers über das Ventil kann dieser z. B. während dem Abbremsen des Drehwerks über den als Pumpe arbeitenden Motor befüllt werden, um beim Wiederbeschleunigen des Drehwerks die gespeicherte Energie wieder zurückzugeben. Hierdurch ergibt sich ein niedrigerer Energieverbrauch des Hydraulikantriebs, wodurch insbesondere der Verbrennungsmotor zum Antrieb der Pumpe kleiner dimensioniert werden kann. Ebenso kann der Hochdruckspeicher auch über die Pumpe aufgeladen werden. Wird der Hochdruckspeicher über das Ventil vom Hydraulikkreislauf getrennt, arbeitet der Hydraulikantrieb dagegen wieder wie ein Hydraulikantrieb nach dem Stand der Technik, bei welchem die Pumpe den Motor antreibt.

Der zum Antrieb der Pumpe verwendete Verbrennungsmotor kann so kleiner dimensioniert werden kann, da während Leistungsspitzen die Energie aus dem Hochdruckspeicher unterstützend verwendet werden kann. Durch den kleiner dimensionierten Verbrennungsmotor lassen sich einerseits Herstellungskosten senken, andererseits vermindert sich auch der Gesamtverbrauch des Hydraulikantriebs, da der Verbrennungsmotor gleichmäßiger belastet wird und durch die kleinere Dimensionierung auch im Normalbetrieb in einem besseren Motorbetriebspunkt gefahren werden kann.

Vorteilhafterweise ist der Hochruckspeicher über das zumindest ein Ventil an mindestens zwei unterschiedlichen Punkten im Hydraulikkreislauf mit der Pumpe und/oder dem Motor verbindbar. An dem einen Verbindungspunkt kann der Hochdruckspeicher angeschlossen werden, um aufgeladen zu werden, an dem anderen Verbindungspunkt, um die gespeicherte Energie in Form von Hydraulikflüssigkeit wieder abzugeben. Auch sind so unterschiedliche Förderrichtungen der Pumpe oder des Motors möglich.

Weiterhin vorteilhafterweise schaltet die Steuerung das zumindest eine Ventil so, daß in einem Energiespeichermodus Hydraulikflüssigkeit in den Hochdruckspeicher gefördert wird und in einem Energierückgewinnungsmodus Hydraulikflüssigkeit aus dem Hochdruckspeicher abfließt. So kann durch die Steuerung z.B. beim Bremsen oder bei niedrigen Belastungen der Pumpe Energie gespeichert und bei Beschleunigungen wieder zurückgegeben werden.

Weiterhin vorteilhafterweise schaltet die Steuerung das zumindest eine Ventil so, daß in einem Normalmodus Pumpe und Motor in einem geschlossenen Kreislauf miteinander in Verbindung stehen. Ein solcher geschlossener Kreislauf aus Pumpe und Motor ist insbesondere bei Drehwerksantrieben gegenüber einem offenen Kreislauf von Vorteil und kann in Phasen, in denen weder Energie gespeichert noch zurückgewonnen wird, zum direkten Antrieb des Motors über die Pumpe dienen.

Vorteilhafterweise ist dabei der Hochdruckspeicher im Normalmodus von dem geschlossenen Kreislauf aus Pumpe und Motor getrennt. Hierdurch kann im Gegensatz zu sekundär geregelten Hydraulikkreisläufen, bei welchen ein Speicher ständig mit der Druckleitung zwischen Pumpe und Motor verbunden ist, ein Konstantmotor eingesetzt werden, während die Ansteuerung des Hydraulikantriebs über eine Verstellpumpe erfolgt. So ergibt sich ein einfacherer und kostengünstigerer Aufbau.

Weiterhin vorteilhafterweise umfaßt der Hydraulikantrieb einen Niederdruckspeicher, der über zumindest ein Ventil mit der Pumpe und/oder dem Motor verbindbar ist, wobei die Steuerung das zumindest eine Ventil ansteuert. Hierbei kann es sich um das gleiche Ventil handeln, über welches auch der Hochdruckspeicher mit dem Hydraulikkreislauf verbindbar ist. Alternativ können aber auch getrennte Ventile oder eine Ventilkombination zum Einsatz kommen. Der Niederdruckspeicher stellt dann die Hydraulikflüssigkeit zur Verfügung, welche im Energiespeichermodus in den Hochdruckspeicher gefördert wird und nimmt umgekehrt die Hydraulikflüssigkeit auf, welche im Energierückgewinnungsmodus aus dem Hochdruckspeicher abfließt.

Vorteilhafterweise ist der Niederdruckspeicher dabei über das zumindest eine Ventil an mindestens zwei unterschiedlichen Punkten im Hydraulikkreislauf mit der Pumpe und/oder dem Motor verbindbar. So kann je nachdem, ob Energie gespeichert oder rückgewonnen wird, der Niederdruckspeicher an den entsprechenden Positionen mit der Pumpe und/oder dem Motor verbunden werden. Ebenso sind unterschiedliche Drehrichtungen des Motors oder der Pumpe möglich.

Vorteilhafterweise schaltet die Steuerung das zumindest eine Ventil so, daß im Energiespeichermodus Hydraulikflüssigkeit aus dem Niederdruckspeicher abfließt und im Rückgewinnungsmodus Hydraulikflüssigkeit in den Niederdruckspeicher zufließt. Während des Energiespeichermodus und des Energierückgewinnungsmodus liegt also bei dem Hydraulikantrieb kein geschlossener Hydraulikkreislauf vor, vielmehr fließt entweder die Hydraulikflüssigkeit vom Hochdruckspeicher in den Niederdruckspeicher und gibt so Energie an den Hydraulikantrieb ab, oder Hydraulikflüssigkeit wird vom Niederdruckspeicher in den Hochdruckspeicher gefördert und speichert so hydraulische Energie.

Vorteilhafterweise schaltet die Steuerung weiterhin das zumindest eine Ventil so, daß in einem Normalmodus der Niederdruckspeicher von dem geschlossenen Kreislauf aus Pumpe und Motor getrennt ist. So ergibt sich im Normalmodus der bereits oben beschriebene vorteilhafte geschlossene Kreislauf aus Motor und Pumpe, während im Energiespeichermodus und im Energierückgewinnungsmodus das Ventil so schaltet, daß kein geschlossener Kreislauf vorliegt.

Während der Hochdruckspeicher im Normalmodus dabei vorteilhafterweise komplett vom geschlossenen Kreislauf aus Pumpe und Motor getrennt ist, wird der Niederdruckspeicher vorteilhafterweise über Rückschlagventile mit der Niederdruckseite des geschlossenen Kreislaufs in Verbindung stehen, um diese wenn nötig mit Hydraulikflüssigkeit zu versorgen. Der Niederdruckspeicher erfüllt so bei dem Hydrauliksystem eine Doppelfunktion: Im Normalbetrieb arbeitet er wie aus dem Stand der Technik bekannt über die Rückschlagventile als Hydraulikflüssigkeitsversorgung der Niederdruckseite, wozu er vorteilhafterweise über eine Pumpe mit Vordruck beaufschlagt wird. Im Energiespeichermodus dient er dagegen als Hydraulikflüssigkeitsquelle für die in den Hochdruckspeicher geförderte Hydraulikflüssigkeit, im Energierückgewinnungsmodus als Hydraulikflüssigkeitsaufnahme für die aus dem Hochdruckspeicher abfließende Hydraulikflüssigkeit. Hierzu wird er vorteilhafterweise während dieser Modi entsprechend mit Motor oder Pumpe verbunden. Vorteilhafterweise liegt dabei im Energiespeichermodus und/oder Energierückgewinnungsmodus kein geschlossener Kreislauf aus Pumpe und Motor vor.

Vorteilhafterweise ist der Hochdruckspeicher bei dem Hydraulikantrieb über das zumindest eine Ventil zumindest mit einer Zulaufseite der Pumpe verbindbar. So kann der Hochdruckspeicher während des Energierückgewinnungsmodus mit dem Zulauf der Pumpe verbunden werden und so die Pumpe unterstützen. Durch den mit der Zulaufseite der Pumpe verbundenen Hochdruckspeicher reduziert sich die Druckdifferenz über die Pumpe, und damit die zum Antrieb der Pumpe benötigte Leistung. So kann der zum Antrieb der Pumpe verwendete Verbrennungsmotor kleiner dimensioniert werden, da während Leistungsspitzen die Pumpe durch den Hochdruckspeicher unterstützt werden kann.

Weiterhin vorteilhafterweise ist der Hochdruckspeicher über das zumindest eine Ventil mit beiden Seiten der Pumpe verbindbar. Insbesondere wenn die Pumpe eine Pumpe mit zwei Förderrichtungen ist, kann so je nach Laufrichtung der Pumpe der Hochdruckspeicher mit der jeweiligen Zulaufseite verbunden werden. Zudem ermöglicht dies, den Hochdruckspeicher gegebenenfalls auch über die Pumpe aufzuladen. Während Betriebsphasen des Hydraulikantriebs, in welchen der hydraulische Motor nicht benötigt wird, kann der Verbrennungsmotor die Pumpe dennoch weiter antreiben und die Energie im Hochdruckspeicher speichern, um während Phasen mit hoher Belastung die Energie wieder zurückzugeben. Auch während Bremsphasen, in welchen der Motor des Hydraulikantriebs als Pumpe wirkt, kann so Hydraulikflüssigkeit in den Hochdruckspeicher gepumpt werden. Hierzu reicht es aus, wenn in solchen Bremsphasen der Hochdruckspeicher z. B. mit der Ablaufseite der Pumpe in Verbindung steht.

Weiterhin vorteilhafterweise ist der Niederdruckspeicher über das zumindest eine Ventil zumindest mit einer Ablaufseite des Motors verbindbar. So kann während der Energierückgewinnung die aus dem Hochdruckspeicher zufließenden Hydraulikflüssigkeit, nachdem sie den Motor verläßt, in den Niederdruckspeicher fließen.

Weiterhin vorteilhafterweise ist der Niederdruckspeicher über das zumindest eine Ventil mit beiden Seiten des Motors verbindbar. Insbesondere bei einem Motor mit zwei Laufrichtungen ermöglicht dies die Energierückgewinnung in beiden Drehrichtungen. Auch kann so während Bremsphasen der Motor als Pumpe arbeiten und Hydraulikflüssigkeit aus dem Niederdruckspeicher in den Hochdruckspeicher pumpen, wobei der Niederdruckspeicher dann mit der Ablaufseite des Motors verbunden wird.

Vorteilhafterweise schaltet die Steuerung des Hydraulikantriebs das zumindest eine Ventil so, daß in einem ersten Energiespeichermodus eine Hydraulikverbindung aus Niederdruckspeicher, Motor, eventuell Pumpe und Hochdruckspeicher vorliegt, wobei der Motor als Pumpe arbeitet. Wie bereits oben beschrieben, kann so die Bremsenergie gespeichert werden, indem Hydraulikflüssigkeit über den als Pumpe arbeitenden Motor vom Niederdruckspeicher in den Hochdruckspeicher gepumpt wird. Die Flüssigkeit kann dabei entweder direkt vom Motor in den Hochdruckspeicher gepumpt werden oder noch über die Pumpe laufen.

Weiterhin vorteilhafterweise steuert die Steuerung des Hydraulikantriebs das zumindest eine Ventil so, daß in einem zweiten Energiespeichermodus eine Hydraulikverbindung aus Niederdruckspeicher, Pumpe und Hochdruckspeicher vorliegt und vorteilhafterweise der Motor davon getrennt ist, wobei die Pumpe Hydraulikflüssigkeit in den Hochdruckspeicher pumpt. So ist es möglich, in Phasen, in welchen der die Pumpe antreibende Verbrennungsmotor zyklusbedingt nur wenig Leistung abgeben muß, zusätzliche Energie zu speichern. Diese Energie steht dann in Phasen, in welchen dem Verbrennungsmotor eine hohe Leistung abgefordert wird, zur Unterstützung zur Verfügung. So kann die Leistungsabgabe des Verbrennungsmotors über den gesamten Zyklus nahezu konstant gehalten werden und ein Betriebspunkt des Verbrennungsmotors gewählt werden, welcher in Bezug auf den Verbrauch günstig ist. Ebenso kann der Verbrennungsmotor so entsprechend kleiner dimensioniert werden.

Weiterhin vorteilhafterweise schaltet die Steuerung des Hydraulikantriebs das zumindest eine Ventil so, daß in einem ersten Energierückgewinnungsmodus eine Hydraulikverbindung aus Hochdruckspeicher, Pumpe, Motor und Niederdruckspeicher vorliegt, so daß der Druck aus dem Hochdruckspeicher die Funktion der Pumpe unterstützt. Wie bereits beschrieben, reduziert sich durch die Verbindung zwischen Hochdruckspeicher und Zulaufseite der Pumpe die Druckdifferenz an der Pumpe, so daß eine geringere Antriebsleistung zum Antrieb der Pumpe notwendig ist. So kann während Beschleunigungsphasen die Funktion der Pumpe unterstützt werden, indem die gespeicherte Energie zurückgewonnen und dem Hydraulikantrieb zur Verfügung gestellt wird.

Weiterhin vorteilhafterweise schaltet die Steuerung des Hydraulikantriebs das zumindest eine Ventil so, daß in einem zweiten Energierückgewinnungsmodus eine Hydraulikverbindung aus Hochdruckspeicher, Pumpe und Niederdruckspeicher vorliegt und der Motor vorteilhafterweise davon getrennt ist, wobei die Pumpe als Motor dient.

Dies ist insbesondere von Vorteil, wenn die Pumpe von einem Antriebsmotor, insbesondere einem Verbrennungsmotor angetrieben wird, welcher noch weitere Verbraucher antreibt. So kann das zusätzliche Antriebsdrehmoment der Pumpe über das Verteilergetriebe anderen Verbrauchern zur Verfügung gestellt werden. Dabei treibt die Energie aus dem Hochdruckspeicher die Pumpe an, während die Hydraulikflüssigkeit in den Niederdruckspeicher fließt.

Weiterhin vorteilhafterweise schaltet die Steuerung in Bremsphasen des Antriebs in einen Energiespeichermodus, insbesondere in den ersten Energiespeichermodus, wobei der Motor als Pumpe dient, und in Beschleunigungsphasen gegebenenfalls in einen Energierückgewinnungsmodus, insbesondere in den ersten Energierückgewinnungsmodus. So kann die Bremsenergie während Bremsphasen gespeichert werden und geht nicht verloren, sondern kann während Beschleunigungsphasen zurückgeführt werden.

Weiterhin vorteilhafterweise schaltet die Steuerung in Phasen, in denen der die Pumpe antreibenden Antriebsmotor wenig belastet wird, in den zweiten Energiespeichermodus. So kann die Leistungsabgabe des Verbrennungsmotors nahezu konstant gehalten werden, was sich auf Verbrauch und Dimensionierung des Verbrennungsmotors positiv auswirkt. Weiterhin vorteilhafterweise schaltet die Steuerung in Phasen, in den der die Pumpe antreibende Antriebsmotor stark belastet wird, in den zweiten Energierückgewinnungsmodus, insbesondere um die dann von der als Motor arbeitenden Pumpe zur Verfügung gestellte Energie anderen Verbrauchern zur Verfügung zu stellen.

Vorteilhafterweise weisen bei dem Hydraulikantrieb Motor und Pumpe zwei Förderrichtungen auf. So läßt sich in einem geschlossenen Kreislauf die Drehrichtung des Motors über die Förderrichtung der Pumpe einstellen.

Weiterhin vorteilhafterweise ermöglicht das mindestens eine Ventil mindestens folgende drei Verbindungskombinationen:
- Der Hochdruckspeicher ist mit einer ersten Seite der Pumpe verbunden, der Niederdruckspeicher ist mit einer ersten Seite des Motors verbunden, die zweiten Seiten von Motor und Pumpe sind miteinander verbunden: je nach Laufrichtung von Pumpe und Motor kann so entweder der Hochdruckspeicher aufgeladen werden, indem der Motor als Pumpe arbeitet, oder der Hochdruckspeicher die Arbeit der Pumpe unterstützen;
- Der Hochdruckspeicher ist mit der zweiten Seite der Pumpe verbunden, der Niederdruckspeicher ist mit der zweiten Seite des Motors verbunden, die ersten Seiten von Motor und Pumpe sind miteinander verbunden: dies ist die spiegelbildliche Situation zur ersten Verbindungskombination, so daß die entsprechenden Funktionen für umgekehrte Drehrichtungen von Motor und Pumpe verwirklicht werden können;
- Der Hochdruckspeicher und der Niederdruckspeicher sind von Pumpe und Motor getrennt, die ersten und zweiten Seiten von Motor und Pumpe sind jeweils miteinander verbunden: in diesem Normalbetriebszustand ergibt sich also ein geschlossener Kreislauf aus Pumpe und Motor.

Durch diese drei Verbindungskombinationen lassen sich insbesondere die ersten Energiespeicher- und Energierückgewinnungsmodi durchführen.

Weiterhin vorteilhafterweise ermöglicht das Ventil die Verbindungskombination: Der Hochdruckspeicher ist mit einer ersten Seite der Pumpe verbunden, der Niederdruckspeicher ist mit einer zweiten Seite der Pumpe verbunden, der Motor ist von Pumpe und Speichern vorteilhafterweise getrennt. Durch diese Anordnung lassen sich je nach Drehrichtung der Pumpe entweder der zweite Energiespeichermodus oder der zweite Energierückgewinnungsmodus durchführen.

Weiterhin vorteilhafterweise ist die Pumpe des Hydraulikantriebs eine Verstellpumpe und/oder der Motor des Hydraulikantriebs ein Konstantmotor. So kann der Hydraulikantrieb über den Schwenkwinkel der Verstellpumpe angesteuert werden, während der Motor als Konstantmotor ausgeführt werden kann. Hierdurch ergibt sich eine einfache Ansteuerung des Systems, wobei durch entsprechendes Ansteuern der Verstellpumpe auch die Energiespeicher und Energierückgewinnungsmodi durchgeführt werden können.

Weiterhin vorteilhafterweise dient dabei der Schwenkwinkel der Pumpe als Eingangsgröße der Steuerung.

Weiterhin vorteilhafterweise ist weiterhin mindestens ein Drucksensor zur Messung eines Hydraulikdrucks vorgesehen, der die Steuerung mit Daten versorgt.

Weiterhin vorteilhafterweise verarbeitet die Steuerung des Hydraulikantriebs Steuersignale des Bedieners.

Hierdurch sind die Eingangsgrößen der Steuerung die Steuersignale vom Bediener, die Drücke an unterschiedlichen Stellen im Kreislauf sowie der Schwenkwinkel der Pumpe. Die Ausgangsgrößen sind dabei vorteilhafterweise die Steuersignale für die Pumpe sowie die Steuersignale für das mindestens eine Ventil.

Durch die Steuerung ergibt sich die Möglichkeit, neben der üblichen Drehwerkssteuerung nach dem Stand der Technik das Hydraulikspeichermanagement durchzuführen, durch welches Energie gespart werden kann und insbesondere ein kleinerer Verbrennungsmotor zum Antrieb der Pumpe verwendet werden kann, wodurch wiederum der Verbrauch und Herstellungskosten gesenkt werden und außerdem die Lärmbelastung sinkt. Die Steuerung steuert hierfür die Pumpe entsprechend an, um die genannten Vorteile zu erreichen.

Weiterhin vorteilhafterweise kommuniziert die Steuerung mit der Antriebselektronik des die Pumpe antreibenden Antriebsmotors, um eine gleichmäßige Auslastung des Antriebsmotors zu gewährleisten. Hierdurch kann insbesondere durch Verwendung des zweiten Energiespeichermodus und gegebenenfalls über den zweiten Energierückgewinnmodus eine gleichmäßige Auslastung des Antriebsmotors gewährt werden, welche den Verbrauch und die Lärmemission senkt. Die Steuerung ist dabei vorteilhafterweise eine Steuerungselektronik, welche vorteilhafterweise aus einem Mikrokontroller und der entsprechenden Sensorik für die Drücke und den Schwenkwinkel der Pumpe besteht.

Die vorliegende Erfindung umfaßt ein Drehwerk eines Baggers mit einem Hydraulikantrieb, wie er oben beschrieben wurde. Durch ein solches Drehwerk insbesondere eines Hydraulikbaggers ergeben sich die gleichen Vorteile, welche oben im Zusammenhang mit dem Hydraulikantrieb beschreiben wurden.

Die vorliegende Erfindung umfaßt außerdem einen Bagger mit einem Hydraulikantrieb insbesondere für das Drehwerk, wie er oben beschrieben wurde. Auch hierdurch ergeben sich die erfindungsgemäßen Vorteile.

Weiterhin umfaßt die vorliegende Erfindung auch die entsprechenden Verfahren zur Ansteuerung eines Hydraulikantriebs insbesondere eines Baggers und dabei insbesondere des Drehwerks, durch welche die Ventile und gegebenenfalls die Pumpe so angesteuert werden, daß die entsprechenden Energiespeicher- und Energierückgewinnungsmodi durchgeführt werden.

Die vorliegende Erfindung wird nun anhand von Ausführungsbeispielen und Zeichnungen näher beschrieben.

Dabei zeigen
- Figur 1: ein erstes Ausführungsbeispiel des Hydraulikantriebs,
- Figur 2: ein zweites Ausführungsbeispiel des Hydraulikantriebsund
- Figur 3: ein drittes Ausführungsbeispiel des Hydraulikantriebs.

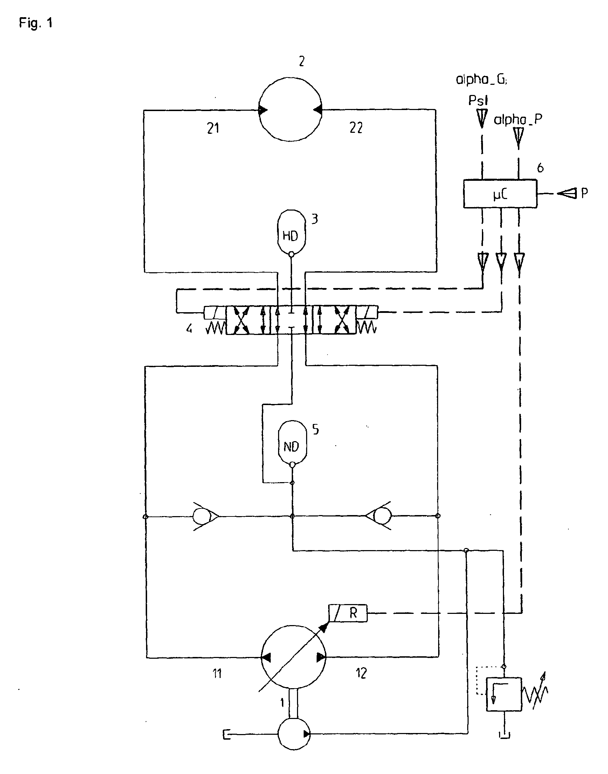

Figur 1 zeigt ein erstes Ausführungsbeispiel des Hydraulikantriebs, bei welchem während Abbremsphasen des Drehwerks im ersten Energiespeichermodus die Energie aus der Abbremsung im Hochdruckspeicher (3) gespeichert werden kann und beim Wiederbeschleunigen des Drehantriebs im ersten Energierückgewinnungsmodus diese Energie wieder an den Antrieb zurückgegeben werden kann. So kann der Dieselmotor entsprechend kleiner dimensioniert werden.

Der Hydraulikantrieb im ersten Ausführungsbeispiel besteht dabei aus der Pumpe (1) und dem Motor (2), hier eine Axialkolbenverstellpumpe und einem Konstantmotor jeweils mit zwei Förderrichtungen. Über das Ventil (4), hier ein 6/3-Wegeventil, kann der Hochdruckspeicher (3) in einer rechten Position des Ventils (4) mit der linken Seite (11) der Pumpe (1) verbunden werden, in der linken Position des Ventils (4) mit der rechten Seite (12) der Pumpe (1). Dementsprechend ist in der rechten Position des Ventils (4) der Niederdruckspeicher (5) mit der linken Seite (21) des Motors (2) verbunden, während der Niederdruckspeicher (5) in der linken Position des Ventils (4) mit der rechten Seite (22) des Motors verbunden ist. Dementsprechend sind in der linken Position des Ventils (4) die linke Seite (11) der Pumpe und die linke Seite (21) des Motors (2) miteinander verbunden, während in der rechten Position des Ventils die rechte Seite (12) der Pumpe (1) und die rechte Seite (22) des Motors (2) miteinander verbunden sind.

In der mittleren Position des Ventils (4) sind dagegen Hochdruckspeicher (3) und Niederdruckspeicher (5) von Motor (1) und Pumpe (2) getrennt, während die linke Seite (11) von Pumpe (1) mit der linken Seite (21) von Pumpe (2) und die rechte Seite (12) von Pumpe (1) mit der rechten Seite (22) von Motor (2) in Verbindung steht.

Der Niederdruckspeicher (5) steht über zwei Rückschlagventile ständig mit der linken Seite (11) und der rechten Seite (12) der Pumpe (1) in Verbindung, um auch während des Normalbetriebs mit geschlossenem Kreislauf die Niederdruckseite des Hydraulikkreislaufs eventuell mit Hydraulikflüssigkeit zu versorgen. Desweiteren wird der Niederdruckspeicher (5) über eine Pumpe mit Vordruck beaufschlagt. Diese ist hier mit der Hauptpumpe verbunden dargestellt. Ebenso ist ein Überdruckventil vorgesehen, welches mit den Niederdruckspeicher in Verbindung steht.

Die Steuerung (6), hier Mikrokontroller, steuert das Ventil (4) sowie die Verstellpumpe (1) an. Als Eingangsgrößen dienen die Drücke im Hydrauliksystem sowie der Schwenkwinkel der Pumpe. Ebenso sind Steuersignale des Bedieners Eingangsgrößen der Steuerung (6). Die Steuerung (6) übernimmt so das Speichermanagement sowie die Drehwerkssteuerung.

Hierbei wird im ersten Energiespeichermodus bei dem in Figur 1 gezeigten ersten Ausführungsbeispiel je nach Drehrichtung des Motors (2) das Ventil (4) in die linke oder in die rechte Position gebracht. Beim Bremsen des Oberwagens wird so der Motor (2) zur Pumpe und die Pumpe (1) zum Motor. Der Niederdruckspeicher (5) ist über das Ventil mit der zulaufenden Seite des Motors verbunden, während der Hochdruckspeicher (3) über das Ventil (4) mit der ablaufenden Seite der Pumpe (1) verbunden ist. So fördert der als Pumpe arbeitende Motor (2), welcher durch die Bewegungsenergie des Oberwagens angetrieben wird, Hydraulikflüssigkeit vom Niederdruckspeicher (5) in den Hochdruckspeicher (3). So kann die Bewegungsenergie des Oberwagens bei dem Abbremsen als hydraulische Energie im Hochdruckspeicher (3) gespeichert werden.

Im ersten Energierückgewinnungsmodus steht das Ventil (4) je nach Drehrichtung von Pumpe (1) und Motor (2) in der linken oder rechten Position, wobei es im Vergleich zum ersten Energiespeichermodus bei gleicher Förderrichtung genau in der entgegengesetzten Position steht. So ist der Hochdruckspeicher über das Ventil (4) mit der Zulaufseite der Pumpe (1) verbunden, während der Niederdruckspeicher mit der Ablaufseite des Motors (2) verbunden ist. Hierdurch reduziert sich das Delta-p an der Pumpe und somit die zum Betrieb der Pumpe benötigte Leistung. Hierbei fließt Hydraulikflüssigkeit von dem Hochdruckspeicher (3) über die Pumpe und den Motor (2) in den Niederdruckspeicher (3) und wandelt dabei die gespeicherte hydraulische Energie wieder in mechanische Energie um. So kann die Beschleunigung des Drehwerks durch die gespeicherte Energie unterstützt werden.

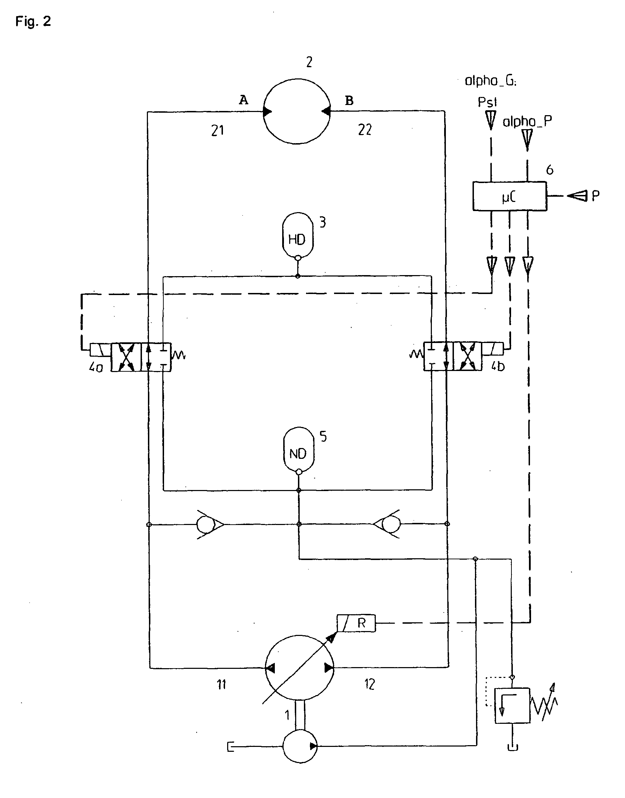

Das zweite Ausführungsbeispiel zeigt eine Variante des ersten Ausführungsbeispiels, welche bis auf die unterschiedliche Ausführung der Ventile mit diesem identisch ist. Statt dem 6/3-Wege-Ventil aus dem ersten Ausführungsbeispiel wird im zweiten Ausführungsbeispiel ein linkes 4/2-Wege-Ventil (4a) und ein rechtes 4/2-Wege-Ventil (4b) eingesetzt, welche jedoch die gleiche Funktionalität aufweisen wie das 6/3-Wegeventil (4) des ersten Ausführungsbeispiels. Befinden sich das linke Ventil (4a) in seiner linken Position und das rechte Ventil (4b) in seiner rechten Position, wie in Figur 2 gezeigt, ergibt sich der für den Normalmodus benötigte geschlossenen Kreislauf aus Pumpe und Motor, bei welchem die linke Seite (11) der Pumpe (1) mit der linken Seite (21) des Motors (2) und die rechte Seite (12) der Pumpe (1) mit der rechten Seite (22) des Motors (2) in Verbindung stehen, während Hochdruckspeicher (3) und Niederdruckspeicher (5) von Pumpe und Motor getrennt sind. Ist dagegen das linke Ventil (4a) in seiner linken Position, während auch das rechte Ventil (4b) in seiner linken Position ist, ist der Hochdruckspeicher (3) mit der rechten Seite der Pumpe (1) verbunden, während der Niederdruckspeicher (5) mit der rechten Seite (22) des Motors (2) verbunden ist. Befindet sich dagegen das linke Ventil (4a) in seiner rechten Position, während das rechte Ventil (4b) in seiner linken Position ist, ist der Hochdruckspeicher (3) mit der linken Seite (11) der Pumpe (1) verbunden, während der Niederdruckspeicher (5) mit der linken Seite (21) des Motors (2) verbunden ist. Die Ventile (4a) und (4b) können so über die Steuerung (6), welche sie ansteuert, genauso wie auch im ersten Ausführungsbeispiel die für den Normalmodus, den ersten Energiespeichermodus und den ersten Energierückgewinnungsmodus nötigen Verbindungen herstellen. Die jeweilige Förderrichtung wird dann durch Einstellen des Einstellwinkels der Pumpe (1) über die Steuerung bewirkt.

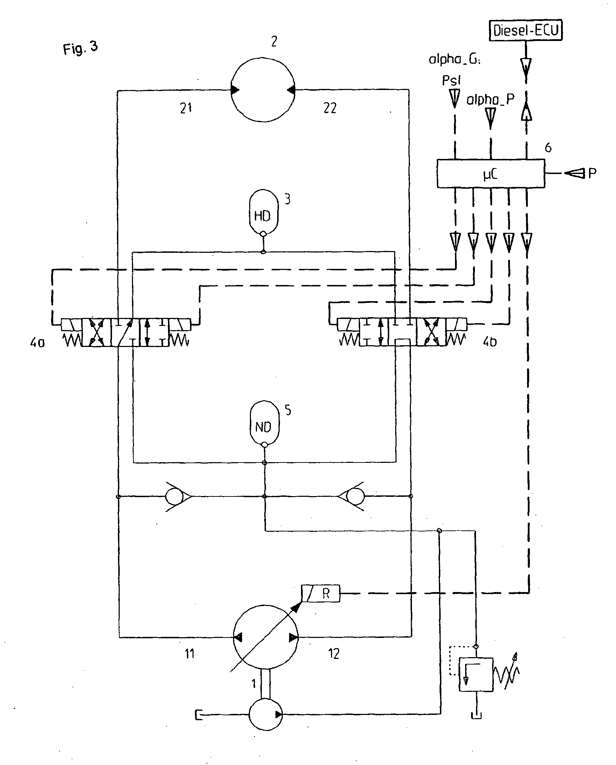

Das in Figur 3 gezeigte dritte Ausführungsbeispiel ist von der Verschaltung her identisch mit dem zweiten Ausführungsbeispiel, wobei jedoch das linke Ventil (4a) und das rechte Ventil (4b) neben den aus dem zweiten Ausführungsbeispiel bekannten linken und rechten Position jeweils noch eine mittlere Position aufweisen. In seiner mittleren Position verbindet das linke Ventil (4a) den Hochdruckspeicher (3) mit der linken Seite (11) der Pumpe, während keine Verbindung zwischen dem Niederdruckspeicher (5) und der linken Seite (21) des Motors (2) hergestellt wird. Das rechte Ventil (4b) verbindet dagegen in seiner mittleren Position den Niederdruckspeicher (5) mit der rechten Seite (12) der Pumpe (1), während der Hochdruckspeicher (3) von der rechten Seite (22) des Motors (2) getrennt ist.

Durch diese Anordnung der 4/3-Wege-Ventile (4a) und (4b) wird es möglich, mit dem in Figur 3 gezeigten Ausführungsbeispiel auch die zweiten Energiespeicherungs- und Energierückgewinnungsmodi durchzuführen.

Da in der mittleren Stellung der Ventile (4a) und (4b) der Motor von der Pumpe getrennt ist und die Pumpe mit Nieder- und Hochdruckspeicher verbunden ist, kann durch Ausschwenken der Pumpe in die entsprechende Richtung der Hochdruckspeicher aufgeladen werden, was dem zweiten Energiespeichermodus entspricht. Die Niederdruckseite der Pumpe versorgt sich dabei aus dem Niederdruckspeicher (5). Ist der Hochdruckspeicher (3) entsprechend gefüllt, wird die Pumpe (1) wieder auf null geschwenkt. So kann in Phasen, in denen der zum Betrieb der Pumpe (1) der Antriebsmotor zyklusbedingt wenig Leistung bereitstellen muß, zusätzlich Energie gespeichert werden.

Durch Ausschwenken der Pumpe (1) in die andere Richtung kann die Pumpe in der Mittelstellung der Ventile (4a) und (4b) dagegen als Motor verwendet werden. Die Hydraulikflüssigkeit fließt dabei aus dem Hochdruckspeicher (3) über die Pumpe (1) zum Niederdruckspeicher (5), so daß die im Hochdruckspeicher (3) gespeicherte Energie die als Motor arbeitende Pumpe (1) antreibt. Das zusätzliche Antriebsdrehmoment kann dann über ein Verteilergetriebe anderen Verbrauchern zur Verfügung gestellt werden.

Ebenso ist es mit dem in Figur 3 gezeigten dritten Ausführungsbeispiel natürlich auch möglich, die ersten Energiespeicherungs- und Energierückgewinnungsmodi durchzuführen. Hierzu wird verfahren wie beim ersten bzw. zweiten Ausführungs-beispiel.

Durch die Energiespeicherung und Energierückgewinnung kann der die Pumpe (1) antreibende Dieselmotor entsprechend kleiner dimensioniert werden, was Kosten, Baugröße und Gewicht spart. Ebenso kann der Verbrauch entsprechend gesenkt werden.

Des weiteren kann der Betriebspunkt des Verbrennungsmotors in Bezug auf den Verbrauch günstiger gewählt werden, wenn der Dieselmotor nicht auch darauf ausgelegt sein muß, Lastspitzen während der Beschleunigungsphasen abzudecken. Insbesondere der zweite Energiespeichermodus erlaubt es zudem, die Leistungsabgabe des Diesels über den gesamten Zyklus nahezu konstant zu halten, was wiederum den Energieverbrauch optimiert. Zusätzlich kann so der Dieselmotor noch kleiner dimensioniert werden, wobei auch Lastspitzen anderer Verbraucher durch den zweiten Energierückgewinnungsmodus abgefedert werden können.

## Patentansprüche

1. Drehwerk eines Baggers mit einem Hydraulikantrieb mit einem Hydraulikkreislauf, der eine Pumpe (1), einen Motor (2), einen Hochdruckspeicher (3), der über zumindest ein Ventil (4, 4a, 4b) mit der Pumpe (1) und/oder dem Motor (2) verbindbar ist, und eine Steuerung (6), welche das zumindest eine Ventil (4, 4a, 4b) ansteuert, umfasst, **dadurch gekennzeichnet,**
**dass** das zumindest eine Ventil (4, 4a, 4b) über Steuerung so schaltbar ist, dass in einem Normalmodus Pumpe (1) und Motor (2) in einem geschlossenen Kreislauf miteinander in Verbindung stehen, während der Hochdruckspeicher (3) von dem geschlossenen Kreislauf aus Pumpe (1) und Motor (2) getrennt ist.

2. Drehwerk nach Anspruch 1, wobei der Hochdruckspeicher (3) über das zumindest eine Ventil (4, 4a, 4b) an mindestens zwei unterschiedlichen Punkten im Hydraulikkreislauf mit der Pumpe (1) und/oder dem Motor (2) verbindbar ist.

3. Drehwerk nach einem der vorangegangenen Ansprüche, mit einem Niederdruckspeicher (5), der über zumindest ein Ventil (4, 4a, 4b) mit der Pumpe (1) und/oder dem Motor (2) verbindbar ist, wobei das Ventil (4, 4a, 4b) über die Steuerung (6) ansteuerbar ist.

4. Drehwerk nach Anspruch 3, wobei der Niederdruckspeicher (5) über das zumindest eine Ventil (4, 4a, 4b) an mindestens zwei unterschiedlichen Punkten im Hydraulikkreislauf mit der Pumpe (1) und/oder dem Motor (2) verbindbar ist.

5. Drehwerk nach Anspruch 3 oder 4, wobei der Niederdruckspeicher im Normalmodus von dem geschlossenen Kreislauf aus Pumpe (1) und Motor (2) getrennt ist.

6. Drehwerk nach einem der vorangegangenen Ansprüche, wobei der Hochdruckspeicher (3) über das zumindest eine Ventil (4, 4a, 4b) zumindest mit einer Zulaufseite (11, 12) der Pumpe (1) verbindbar ist und/oder wobei der Hochdruckspeicher (3) über das zumindest eine Ventil (4, 4a, 4b) mit beiden Seiten (11, 12) der Pumpe (1) verbindbar ist.

7. Drehwerk nach einem der Ansprüche 3 bis 6, wobei das zumindest eine Ventil (4, 4a, 4b) über die Steuerung (6) so schaltbar ist, daß in einem zweiten Energiespeichermodus eine Hydraulikverbindung aus Niederdruckspeicher (5), Pumpe (1) und Hochdruckspeicher (3) vorliegt und vorteilhafterweise der Motor (2) davon getrennt ist, wobei die Pumpe (1) Hydraulikflüssigkeit in den Hochdruckspeicher (3) pumpt.

8. Drehwerk nach einem der Ansprüche 3 bis 7, wobei das zumindest eine Ventil (4, 4a, 4b) über die Steuerung (6) so schaltbar ist, daß in einem zweiten Energierückgewinnungsmodus eine Hydraulikverbindung aus Hochdruckspeicher (3), Pumpe (1) und Niederdruckspeicher (5) vorliegt und der Motor (2) vorteilhafterweise davon getrennt ist, wobei die Pumpe (1) als Motor (2) dient.

9. Drehwerk nach einem der vorangegangenen Ansprüche, wobei die Pumpe (1) von einem Antriebsmotor, insbesondere einem Verbrennungsmotor angetrieben wird, welcher noch weitere Verbraucher antreibt.

10. Drehwerk nach einem der vorangegangenen Ansprüche, wobei die Steuerung (6) in Phasen, in denen der die Pumpe (1) antreibende Antriebsmotor gering belastet wird, in den zweiten Energiespeichermodus schaltet.

11. Drehwerk nach einem der vorangegangenen Ansprüche, wobei die Steuerung (6) in Phasen, in denen der die Pumpe (1) antreibende Antriebsmotor stark belastet wird, in den zweiten Energierückgewinnungsmodus wechselt.

12. Drehwerk nach einem der Ansprüche 3 bis 11, wobei das mindestens eine Ventil (4, 4a, 4b) die Verbindungskombination
- Hochdruckspeicher (3) ist mit einer ersten Seite der Pumpe (1) verbunden, Niederdruckspeicher (5) ist mit einer zweiten Seite der Pumpe (1) verbunden, der Motor (2) ist von Pumpe (1) und Speichern vorteilhafterweise getrennt ermöglicht.

13. Drehwerk nach einem der vorangegangenen Ansprüche, wobei die Steuerung (6) mit der Antriebselektronik des die Pumpe (1) antreibenden Antriebsmotors kommuniziert, um eine gleichmäßige Auslastung des Antriebsmotors zu gewährleisten.

14. Drehwerk nach einem der vorhergehenden Ansprüche 3 bis 13, wobei der Niederdruckspeicher (5) über das zumindest eine Ventil (4, 4a, 4b) zumindest mit einer Ablaufseite (21, 22) des Motors verbindbar ist und/oder wobei der Niederdruckspeicher (5) über das zumindest eine Ventil (4, 4a, 4b) mit beiden Seiten (21, 22) des Motors verbindbar ist.

15. Bagger mit einem Drehwerk nach einem der vorangegangenen Ansprüche.

## Claims

1. A slewing gear of an excavator having a hydraulic drive comprising a hydraulic circuit which includes a pump (1), an engine (2), a high pressure store (3) which can be connected via at least one valve (4, 4a, 4b) to the pump (1) and/or to the engine (2), and a controller (6) which controls the at least one valve (4, 4a, 4b),
**characterized in that**
the at least one valve (4, 4a, 4b) can be switched by the controller so that the pump (1) and the engine (2) are in communication with one another in a closed circuit in a normal mode, while the high pressure store (3) is separate from the closed circuit of pump (1) and engine (2).

2. A slewing gear in accordance with claim 1, wherein the high pressure store (3) can be connected to the pump (1) and/or to the engine (2) at at least two different points in the hydraulic circuit via the at least one valve (4, 4a, 4b).

3. A slewing gear in accordance with one of the preceding claims comprising a low pressure store (5) which can be connected to the pump (1) and/or to the engine (2) via at least one valve (4, 4a, 4b), with the valve (4, 4a, 4b) being able to be controlled by the controller (6).

4. A slewing gear in accordance with claim 3, wherein the low pressure store (5) can be connected to the pump (1) and/or to the engine (2) at at least two different points in the hydraulic circuit via the at least one valve (4, 4a, 4b).

5. A slewing gear in accordance with claim 3 or 4, wherein the low pressure store is separate from the closed circuit of pump (1) and engine (2) in the normal mode.

6. A slewing gear in accordance with one of the preceding claims, wherein the high pressure store (3) can be connected to at least an inflow side (11, 12) of the pump (1) via the at least one valve (4, 4a, 4b) and/or the high pressure store (3) can be connected to both sides (11, 12) of the pump (1) via the at least one valve (4, 4a, 4b).

7. A slewing gear in accordance with one of the claims 3 to 6, wherein the at least one valve (4, 4a, 4b) can be switched by the controller (6) so that a hydraulic connection of low pressure store (5), pump (1) and high pressure store (3) is present in a second energy storage mode and the engine (2) is advantageously separate therefrom, with the pump (1) pumping hydraulic fluid into the high pressure store (3).

8. A slewing gear in accordance with one of the claims 3 to 7, wherein the at least one valve (4, 4a, 4b) can be switched by the controller (6) so that a hydraulic connection of high pressure store (3), pump (1) and low pressure store (5) is present in a second energy recovery mode and the engine (2) is advantageously separate therefrom, with the pump (1) serving as an engine (2).

9. A slewing gear in accordance with one of the preceding claims, wherein the pump (1) is driven by a drive engine, in particular by an internal combustion engine, which drives further consumers.

10. A slewing gear in accordance with one of the preceding claims, wherein the controller (6) switches into the second energy storage mode in phases in which the drive engine driving the pump (1) has a small load.

11. A slewing gear in accordance with one of the preceding claims, wherein the controller (6) switches into the second energy recovery mode in phases in which the drive engine driving the pump (1) has a high load.

12. A slewing gear in accordance with one of the claims 3 to 11, wherein the at least one valve (4, 4a, 4b) enables the connection combination
- High pressure store (3) is connected to a first side of the pump (1), low pressure store (5) is connected to a second side of the pump (1), the engine (2) is advantageously separate from the pump (1) and storage.

13. A slewing gear in accordance with one of the preceding claims, wherein the controller (6) communicates with the electronic driving system of the drive engine driving the pump (1) to ensure a uniform capacity utilization of the drive engine.

14. A slewing gear in accordance with one of the claims 3 to 13, wherein the low pressure store (5) can be connected to at least an outflow side (21, 22) of the engine via the at least one valve (4, 4a, 4b) and/or the low pressure store (5) can be connected to both sides (21, 22) of the engine via the at least one valve (4, 4a, 4b).

15. An excavator comprising a slewing gear in accordance with one of the preceding claims.

## Revendications

1. Mécanisme de rotation d'une excavatrice avec un entraînement hydraulique avec un circuit hydraulique, qui comprend une pompe (1), un moteur (2), un réservoir haute pression (3) pouvant être relié par au moins une vanne (4, 4a, 4b) à la pompe (1) et/ou au moteur (2), et une commande (6) qui commande la au moins une vanne (4, 4a, 4b), **caractérisé en ce que** la au moins une vanne (4, 4a, 4b) peut être commutée par la commande de façon qu'en mode normal, la pompe (1) et le moteur (2) sont reliés en circuit fermé, pendant que le réservoir haute pression (3) est séparé du circuit fermé de la pompe (1) et du moteur (2).

2. Mécanisme de rotation selon la revendication 1, où le réservoir haute pression (3) peut être relié par la au moins une vanne (4, 4a, 4b) à au moins deux points différents dans le circuit hydraulique à la pompe (1) et/ou au moteur (2).

3. Mécanisme de rotation selon l'une des revendications précédentes, avec un réservoir basse pression (5), qui peut être relié par au moins une vanne (4, 4a, 4b) à la pompe (1) et/ou au moteur (2), où la vanne (4, 4a, 4b) peut être commandée par la commande (6).

4. Mécanisme de rotation selon la revendication 3, où le réservoir basse pression (5) peut être relié par la au moins une vanne (4, 4a, 4b) à au moins deux points différents dans le circuit hydraulique à la pompe (1) et/ou au moteur (2).

5. Mécanisme de rotation selon la revendication 3 ou 4, où le réservoir basse pression, en mode normal, est séparé du circuit fermé de la pompe (1) et du moteur (2).

6. Mécanisme de rotation selon l'une des revendications précédentes, où le réservoir haute pression (3) peut être relié par la au moins une vanne (4, 4a, 4b) à au moins un côté d'afflux (11, 12) de la pompe (1), et/ou où le réservoir haute pression (3) peut être relié par la au moins une vanne (4, 4a, 4b) aux deux côtés (11, 12)) de la pompe (1).

7. Mécanisme de rotation selon l'une des revendications 3 à 6, où la au moins une vanne (4, 4a, 4b) peut être commutée par la commande (6) de façon que dans un deuxième mode de stockage d'énergie, il existe une liaison hydraulique formée par le réservoir basse pression (5), la pompe (1) et le réservoir haute pression (3) et, avantageusement, le moteur (2) en est séparé, où la pompe (1) pompe le liquide hydraulique dans le réservoir haute pression (3).

8. Mécanisme de rotation selon l'une des revendications 3 à 7, où la au moins une vanne (4, 4a, 4b) peut être commutée par la commande (6) de façon que dans un deuxième mode de récupération d'énergie, il existe une liaison hydraulique formée par le réservoir haute pression (3), la pompe (1) et le réservoir basse pression (5), et le moteur (2) en est avantageusement séparé, la pompe (1) servant de moteur (2).

9. Mécanisme de rotation selon l'une des revendications précédentes, où la pompe (1) est entraînée par un moteur d'entraînement, en particulier un moteur à combustion, qui entraîne encore d'autres usagers.

10. Mécanisme de rotation selon l'une des revendications précédentes, où la commande (6) commute dans les phases, durant lesquelles le moteur d'entraînement entraînant la pompe (1) est faiblement sollicité, au deuxième mode de stockage d'énergie.

11. Mécanisme de rotation selon l'une des revendications précédentes, où la commande (6) change dans des phases, durant lesquelles le moteur d'entraînement entraînant la pompe (1) est fortement sollicité, dans le deuxième mode de récupération d'énergie.

12. Mécanisme de rotation selon l'une des revendications 3 à 11, où la au moins une vanne (4, 4a, 4b) permet la combinaison de liaison
- le réservoir haute pression (3) est relié à un premier côté de la pompe (1), le réservoir basse pression (5) est relié à un deuxième côté de la pompe (1), le moteur (2) est avantageusement séparé de la pompe (1) et des réservoirs.

13. Mécanisme de rotation selon l'une des revendications précédentes, où la commande (6) communique avec l'électronique d'entraînement du moteur d'entraînement entraînant la pompe (1), afin d'assurer une charge uniforme du moteur d'entraînement.

14. Mécanisme de rotation selon l'une des revendications précédentes 3 à 13, où le réservoir basse pression (5) est relié par la au moins une vanne (4, 4a, 4b) au moins à un côté d'écoulement (21, 22) du moteur et/ou où le réservoir basse pression (5) peut être relié par la au moins une vanne (4, 4a, 4b) aux deux côtés (21, 22) du moteur.

15. Excavatrice avec un mécanisme de rotation selon l'une des revendications précédentes.
